# FASCICULE DE BREVET EUROPEEN

(11) **EP 4 188 877 B1**
(45) Date de publication et mention de la délivrance du brevet: **16.10.2024**
(21) Numéro de dépôt: 21752081.6
(22) Date de dépôt: 20.07.2021
(51) Int. Cl.: C01B 32/05, C04B 35/83, C04B 35/622

(54) **PROCEDE DE RECYCLAGE DE SOUS-PRODUITS CARBONES**
VERFAHREN ZUR WIEDERVERWERTUNG VON KOHLENSTOFFHALTIGEN NEBENPRODUKTEN
METHOD FOR RECYCLING CARBONACEOUS BY-PRODUCTS

(30) Priorité: 30.07.2020 FR 2008126
(43) Date de publication de la demande: 07.06.2023
(73) Titulaire: Safran Ceramics, 33185 Le Haillan (FR)
(72) Inventeur: POTIN, Jean-François, Daniel, René, 77550 MOISSY-CRAMAYEL (FR); MAISSE, Laurent, 77550 MOISSY-CRAMAYEL (FR)
(74) Mandataire: Cabinet Beau de Loménie
(86) Numéro de dépôt international: PCT/FR2021/051354
(87) Numéro de publication internationale: WO 2022/023642

(56) Documents cités:
- EP-A1- 0 835 853
- WO-A1-2020/120857
- WO-A1-95/11867
- MCALLISTER P ET AL: "Ni-Catalyzed carbon infiltration of carbon-fiber substrates", CARBON, ELSEVIER OXFORD, GB, vol. 30, no. 2, 1 January 1992 (1992-01-01), pages 189 - 200, XP024357130, ISSN: 0008-6223, [retrieved on 19920101], DOI: 10.1016/0008-6223(92)90079-C

## Description

### Domaine Technique

L'invention concerne le domaine des procédés de préparation de pièces en matériau composite carbone/carbone, et plus précisément le recyclage des sous-produits générés au cours de tels procédés.

### Technique antérieure

Les pièces en matériau carbone/carbone pyrolytique connaissent un intérêt technologique croissant du fait du bon compromis qu'elles offrent en termes de résistance et de poids.

Il est connu d'obtenir des pièces en matériau carbone/carbone pyrolytique par infiltration chimique ou par dépôt chimique en phase vapeur.

Par exemple, l'article de Mc Alister et al. Carbon, vol. 30, No 2, pp 189-200 illustre un tel procédé.

De tels procédés utilisent une phase gazeuse réactive riche en carbone mise au contact de substrats poreux dans des conditions telles que la phase gazeuse peut réagir au contact du substrat pour former une matrice dans les porosités des substrats. Le choix du gaz constituant la phase gazeuse et les conditions de température et de pression régnant dans le four déterminent la nature de la matrice formée au sein des pièces en matériau composite.

Toutefois, de tels procédés génèrent des sous-produits carbonés pour parvenir à une pièce finale. Ces sous-produits ne sont généralement pas valorisés dans les procédés de préparation de pièces en matériau composite actuels. La valorisation de ces sous-produits carbonés permettrait de diminuer les coûts ainsi que l'empreinte écologique des procédés de préparation et donc des pièces obtenues.

Il est souhaitable de recycler les sous-produits carbonés obtenus lors de la fabrication d'une pièce en matériau composite carbone/carbone.

### Exposé de l'invention

L'invention propose un procédé de recyclage d'un sous-produit carboné obtenu lors de la fabrication d'une pièce en matériau composite carbone/carbone comprenant :
- la pyrolyse du sous-produit carboné de sorte à obtenir un résidu carboné solide ;
- la formation d'une phase gazeuse comprenant un hydrocarbure à partir du résidu carboné ;
- la séparation de l'hydrocarbure du reste de la phase gazeuse ;
- l'introduction dans une enceinte réactionnelle de l'hydrocarbure ainsi séparé ; et
- la formation de pyrocarbone dans l'enceinte réactionnelle à partir de l'hydrocarbure introduit par infiltration ou dépôt chimique en phase vapeur.

Le sous-produit est un produit d'une étape quelconque du procédé de préparation de la pièce en matériau composite qui ne se retrouve pas dans la pièce finale. Il s'agit d'un déchet de ce procédé de préparation.

Un tel procédé permet de valoriser au moins un sous-produit carboné obtenu lors de la fabrication d'une pièce en matériau composite. Ainsi, le bilan carbone de l'ensemble du cycle est grandement amélioré, et son coût est également diminué, puisqu'une partie des réactifs nécessaires à la formation de pyrocarbone dans l'enceinte réactionnelle provient du recyclage du sous-produit.

Dans un mode de réalisation, le sous-produit carboné comprend : un hydrocarbure aromatique polycyclique, un sous-produit issu d'une opération textile de fabrication d'un renfort fibreux de la pièce en matériau composite, un sous-produit issu de l'usinage d'une ébauche de la pièce en matériau composite, ou plusieurs de ces sous-produits.

Dans un procédé de préparation d'une pièce en matériau composite, il est généralement procédé à la préparation d'une préforme fibreuse de la pièce, la préforme étant ensuite densifiée par une étape de d'infiltration ou de dépôt chimique en phase vapeur. La préparation de la préforme fibreuse peut comprendre une ou plusieurs opération(s) textile(s), notamment des étapes de tissage et/ou d'aiguilletage. De telles opérations textiles peuvent générer des chutes de fibres de carbone qui constituent un sous-produit recyclable par mise en oeuvre de l'invention.

De même, le procédé d'infiltration ou de dépôt chimique en phase vapeur est réalisé à l'aide d'une phase gazeuse réactive introduite dans une enceinte réactionnelle, où sont présentes des préformes de pièces en matériau composite. Les conditions de pression et de température régnant dans le four sont adaptées pour que la phase gazeuse réactive forme, par réaction au sein des porosités de la préforme, une matrice de carbone. Toutefois, il est généralement observé que la phase gazeuse effluente récupérée en sortie de l'enceinte réactionnelle après passage dans les porosités de la préforme comprend des espèces de la phase réactive initiale n'ayant pas réagi et des hydrocarbures aromatiques polycycliques issus de réactions parasites tels que le naphtalène, le pyrène, l'anthracène, l'acénaphtylène. Les hydrocarbures aromatiques polycycliques condensent sous forme de goudrons lorsque le gaz effluent refroidit, ces goudrons constituent un sous-produit recyclable par mise en oeuvre de l'invention.

A l'issue du procédé de densification de la préforme, une ébauche de la pièce peut également être soumise à une étape d'usinage final, notamment pour lui donner les dimensions exactes souhaitées. Une telle étape d'usinage final génère des chutes de matière qui peuvent aussi être recyclées par mise en oeuvre de l'invention.

Plusieurs techniques sont envisageables pour former la phase gazeuse à partir du résidu carboné mais il est préféré que la formation de la phase gazeuse comprenne :
- une oxydation du résidu carboné de sorte à obtenir un oxyde de carbone gazeux ; et
- une hydrogénation de l'oxyde de carbone obtenu de sorte à former la phase gazeuse comprenant l'hydrocarbure.

Une telle décomposition en deux étapes de la formation de la phase gazeuse permet d'utiliser des conditions de pression et de température moins contraignantes industriellement par rapport à une hydrogazéification directe du résidu carboné.

L'oxydation du résidu carboné peut être réalisée par un procédé de gazéification en présence de vapeur d'eau. Cette technique étant connue en soi. L'oxyde de carbone peut être du monoxyde et/ou du dioxyde de carbone.

L'oxydation du résidu carboné peut être réalisée à une température comprise entre 1000°C et 1500°C et à une pression comprise entre 5 bar et 35 bar.

Dans le mode de réalisation décrit ci-dessus, l'hydrogénation de l'oxyde de carbone peut être réalisée en faisant réagir l'oxyde de carbone produit lors de l'oxydation du résidu carboné avec du dihydrogène.

L'hydrogénation peut être réalisée à une température comprise entre 250°C et 500°C et à une pression comprise entre 1 bar et 10 bar.

Dans un mode de réalisation, l'hydrocarbure comprend un hydrocarbure linéaire saturé ayant de 1 à 4 atomes de carbone, par exemple du méthane, de l'éthane, du propane ou un mélange de ces composés.

En particulier, de l'eau est formée lors de l'hydrogénation, l'eau formée étant ensuite séparée de l'hydrocarbure puis utilisée pour oxyder le résidu carboné. Un tel mode de réalisation permet de réduire encore davantage les coûts d'un procédé selon l'invention puisqu'il réduit la quantité de réactifs à apporter pour l'oxydation du résidu carboné.

Dans un autre mode de réalisation, la formation de la phase gazeuse peut être réalisée en une seule étape par hydrogazéification directe du résidu carboné.

Quel que soit le mode de réalisation considéré, plusieurs techniques connues en soi peuvent être utilisées pour séparer l'hydrocarbure du reste de la phase gazeuse. Pour réaliser cette séparation, la phase gazeuse peut traverser une membrane laissant passer sélectivement l'hydrocarbure ou on peut réaliser une combinaison de lavage de la phase gazeuse et de condensation afin d'isoler l'hydrocarbure. Dans le cas particulier d'une hydrogazéification directe, une séparation cryogénique peut être mise en oeuvre.

Dans un mode de réalisation, un flux gazeux est formé lors de la pyrolyse du sous-produit, ce flux gazeux comprenant un hydrocarbure additionnel et du dihydrogène, et le dihydrogène est séparé du reste du flux gazeux.

Une telle étape permet de valoriser les gaz issus de la pyrolyse du sous-produit carboné et ainsi d'augmenter le nombre d'espèces valorisées en fin de procédé.

Dans ce mode de réalisation, le dihydrogène ainsi séparé peut être utilisé afin de former la phase gazeuse, par exemple pour réaliser l'hydrogénation de l'oxyde de carbone obtenu par oxydation du résidu carboné comme décrit plus haut.

Un tel mode de réalisation permet de diminuer davantage encore les coûts du procédé puisqu'une partie du dihydrogène utile pour l'étape de formation de la phase gazeuse peut être obtenu directement à partir des gaz issus de la pyrolyse.

Dans un mode de réalisation, l'hydrocarbure additionnel séparé du dihydrogène est en tout ou partie introduit dans l'enceinte réactionnelle pour former le pyrocarbone dans cette enceinte.

Un tel recyclage permet d'améliorer encore le bilan carbone du procédé de recyclage puisqu'une partie de la phase gazeuse réactive nécessaire à la formation de pyrocarbone dans l'enceinte réactionnelle est alors obtenue par le recyclage du flux gazeux généré lors de la pyrolyse du produit carboné, diminuant ainsi l'apport nécessaire en phase gazeuse réactive.

Un tel mode de réalisation peut nécessiter une étape supplémentaire de séparation de l'hydrocarbure additionnel du reste du flux gazeux, ou bien la séparation de l'hydrocarbure additionnel peut être réalisée conjointement à l'étape de séparation du dihydrogène. Par exemple une telle séparation peut être réalisée par des membranes, par distillation cryogénique ou par des méthodes d'adsorption par inversion de pression (ou PSA pour l'acronyme anglais « Pressure Swing Adsorber »).

Par exemple, l'hydrocarbure additionnel peut comprendre un hydrocarbure linéaire saturé ayant de 1 à 4 atomes de carbone, par exemple du méthane, de l'éthane, du propane, du butane ou un mélange de ces composés.

Dans un mode de réalisation, lors de la réalisation du procédé, l'enceinte réactionnelle comprend une préforme d'une pièce de friction à obtenir, et l'on densifie cette préforme par le pyrocarbone formé par infiltration chimique en phase vapeur à partir de l'hydrocarbure introduit.

Un tel mode de réalisation permet, comme indiqué ci-dessus d'obtenir la densification d'une pièce de friction à moindres coûts puisqu'une partie des réactifs nécessaires est obtenue via le recyclage des sous-produits du procédé de fabrication.

### Brève description des dessins

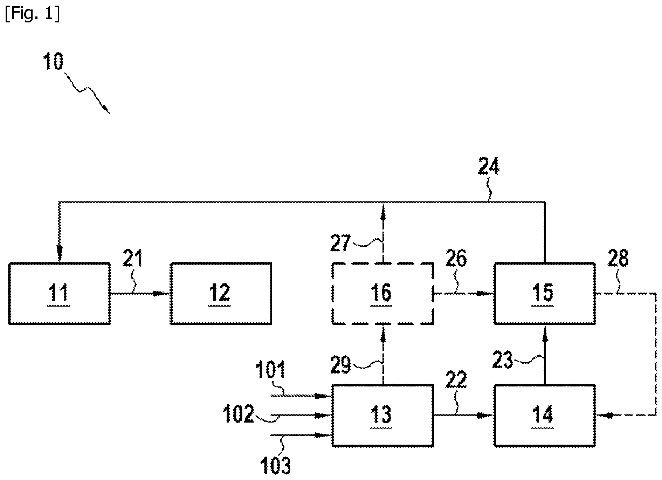

[Fig. 1] La figure 1 illustre, de manière schématique et partielle, des étapes d'un procédé selon un mode de réalisation de l'invention.

### Description des modes de réalisation

L'invention est à présent décrite au moyen d'un exemple de réalisation ayant une vocation illustrative et ne devant pas être interprété comme limitant l'invention.

Un procédé 10 selon l'invention est représenté schématiquement en figure 1.

Les étapes facultatives dans l'exemple de procédé 10 considéré sont en pointillés.

Des sous-produits carbonés (101, 102, 103) issus de différentes étapes d'un procédé de fabrication d'une pièce en matériau composite carbone/carbone sont introduits dans une enceinte de pyrolyse 13.

Comme évoqué plus haut, il peut par exemple s'agir de chutes de fibres de carbone 101 obtenues lors d'opérations textiles réalisées pour obtenir une préforme fibreuse d'une pièce en matériau composite carbone/carbone, d'hydrocarbures aromatiques polycycliques 102 obtenus en sortie d'une enceinte réactionnelle 12 de fabrication d'une pièce en matériau composite carbone/carbone, ou encore de chutes d'usinage d'une pièce en matériau composite carbone/carbone 103 obtenues lors de l'usinage final d'une ébauche de pièce en matériau composite.

Dans un mode de réalisation, le flux 102 peut comprendre une ou plusieurs huiles de lavage éventuellement utilisées pour piéger les hydrocarbures polyaromatiques à la sortie de l'enceinte réactionnelle 12. Dans un autre mode de réalisation, les hydrocarbures polyaromatiques sont séparés de telles huiles avant d'être introduits dans l'enceinte de pyrolyse 13.

Il n'est pas nécessaire pour les besoins de l'invention d'avoir une pluralité de sous-produits carbonés 101, 102, 103, et le fonctionnement présenté ici avec une pluralité de sous-produits carbonés 101, 102, 103 reste similaire dans le cas où un seul des sous-produits carbonés 101, 102, 103 est utilisé.

La pyrolyse des sous-produits carbonés est ensuite réalisée dans l'enceinte de pyrolyse 13. Cette pyrolyse produit un résidu carboné solide de pyrolyse 22 ainsi qu'un flux gazeux de pyrolyse 29.

Le résidu carboné de pyrolyse 22 peut subir une oxydation 14, par exemple en étant placé en présence d'eau, par exemple sous forme de vapeur d'eau.

Cette oxydation peut être une gazéification aboutissant à la formation de monoxyde de carbone, c'est-à-dire une réaction chimique d'hydro-oxydation du carbone dont le bilan peut s'écrire : C + H₂O <--> CO + H₂, et éventuellement à la formation de dioxyde de carbone produit par la réaction d'équilibre suivante : 2 CO <--> C + CO₂. L'oxydation du résidu carboné de pyrolyse 22 permet d'obtenir un oxyde de carbone 23, par exemple du monoxyde de carbone et/ou du dioxyde de carbone. L'oxyde de carbone 23 subit alors une hydrogénation 15 pour former au moins un hydrocarbure 24.

Dans un mode de réalisation, l'hydrogénation permet former du méthane, par exemple via une réaction chimique dont le bilan peut s'écrire : CO + 3 H₂ <--> CH₄ + H₂O [réaction 1], et éventuellement une réaction dont le bilan peut s'écrire : CO₂ + 4H₂ <--> CH₄ + 2 H₂O [réaction 2] du fait de l'équilibre entre CO et CO₂ décrit ci-dessus.

Dans un mode de réalisation, un catalyseur, par exemple un catalyseur au nickel, peut être présent pour catalyser la première [réaction 1] et/ou la deuxième réaction [réaction 2], et ainsi augmenter davantage la vitesse de la formation de l'hydrocarbure 24.

L'eau 28 produite lors de l'hydrogénation 15 peut être récupérée par condensation.

Comme indiqué plus haut, l'étape de séparation de l'hydrocarbure du reste de la phase gazeuse peut être réalisée par lavage et condensation ou à l'aide d'une ou plusieurs membranes sélectives.

Dans un mode de réalisation, l'hydrocarbure 24 à l'état gazeux est ajouté à une phase gazeuse réactive 11, qui est introduite 21 dans une enceinte réactionnelle.

Dans un mode de réalisation non représenté en figure 1, les hydrocarbures aromatiques polycycliques 102 obtenus en sortie de l'enceinte réactionnelle 12 peuvent être introduits dans l'enceinte de pyrolyse 13, au besoin après une étape de séparation additionnelle non représentée pour les isoler du flux gazeux obtenu en sortie de l'enceinte réactionnelle 12.

Un tel mode de réalisation permet un recyclage continu des hydrocarbures aromatiques polycycliques 102 obtenus en sortie de l'enceinte de densification, et leur valorisation au moyen de l'ensemble des étapes de pyrolyse 13, d'obtention 14 d'un oxyde de carbone 23, et d'hydrogénation 15 de l'oxyde de carbone obtenu 23.

Comme indiqué ci-dessus, dans un mode de réalisation non représenté, on peut réaliser une hydrogazéification directe pour former la phase gazeuse et obtenir l'hydrocarbure.

Dans un mode de réalisation et de manière facultative, le flux gazeux généré lors de la pyrolyse 29 peut subir une séparation 16 de sorte à séparer le dihydrogène 26 du reste du flux gazeux 29. Le dihydrogène 26 ainsi séparé peut alors être utilisé au cours de l'étape d'hydrogénation 15 de l'oxyde de carbone 23.

Le cas échéant, le dihydrogène 26 peut également être utilisé si une hydrogazéification directe du résidu carboné est réalisée. Par exemple une telle étape d'hydrogazéification peut être réalisée à environ 50 bar et environ 1000 °C.

Dans un mode de réalisation, l'étape de séparation 16 des composants du flux gazeux de pyrolyse 29 peut également permettre une séparation d'un hydrocarbure additionnel 27, lequel peut être mélangé à l'hydrocarbure 24 dans la phase réactive 11.

Dans un mode de réalisation, l'hydrocarbure additionnel 27 peut être identique à l'hydrocarbure 24, ou, dans le cas où plusieurs hydrocarbures 24 sont obtenus, identique à l'un de ces hydrocarbures 24 ou différent.

De manière facultative, comme représenté en figure 1, l'eau 28 créée lors de l'hydrogénation 15 de l'oxyde de carbone 23 peut être utilisée pour l'étape d'oxydation 14 du résidu de pyrolyse 22.

Le procédé 10 permet d'obtenir au moins un hydrocarbure 24 via la valorisation de sous-produits carbonés. Ainsi, le coût économique du procédé de fabrication 10 d'une pièce en matériau carbone/carbone est réduit, et le bilan carbone d'un tel procédé est donc amélioré.

## Revendications

1. Procédé de recyclage (10) d'un sous-produit carboné (101, 102, 103) obtenu lors de la fabrication d'une pièce en matériau composite carbone/carbone comprenant :
- la pyrolyse (13) du sous-produit carboné de sorte à obtenir un résidu carboné solide (22) ;
- la formation d'une phase gazeuse comprenant un hydrocarbure (24) à partir du résidu carboné ;
- la séparation de l'hydrocarbure du reste de la phase gazeuse ;
- l'introduction dans une enceinte réactionnelle (12) de l'hydrocarbure (24) ainsi séparé; et
- la formation de pyrocarbone dans l'enceinte réactionnelle à partir de l'hydrocarbure introduit par infiltration ou dépôt chimique en phase vapeur.

2. Procédé de recyclage selon la revendication 1, dans lequel le sous-produit carboné comprend : un hydrocarbure aromatique polycyclique (102), un sous-produit issu d'une opération textile de fabrication d'un renfort fibreux de la pièce en matériau composite (101), un sous-produit issu de l'usinage d'une ébauche de la pièce en matériau composite (103), ou plusieurs de ces sous-produits.

3. Procédé de recyclage selon la revendication 1 ou 2, dans lequel la formation de la phase gazeuse comprend :
- une oxydation (14) du résidu carboné (22) de sorte à obtenir un oxyde de carbone gazeux (23) ; et
- une hydrogénation (15) de l'oxyde de carbone obtenu de sorte à former la phase gazeuse comprenant l'hydrocarbure (24).

4. Procédé de recyclage selon la revendication 3, dans lequel de l'eau (28) est formée lors de l'hydrogénation (15), l'eau formée étant ensuite séparée de l'hydrocarbure puis utilisée pour oxyder le résidu carboné (22).

5. Procédé de recyclage selon l'une quelconque des revendications 1 à 4, dans lequel un flux gazeux (29) est formé lors de la pyrolyse du sous-produit, ce flux gazeux comprenant un hydrocarbure additionnel (27) et du dihydrogène (26), et dans lequel le dihydrogène est séparé du reste du flux gazeux.

6. Procédé de recyclage selon la revendication 5, dans lequel le dihydrogène (26) ainsi séparé est utilisé afin de former la phase gazeuse.

7. Procédé selon la revendication selon la revendication 5 ou 6, dans lequel l'hydrocarbure additionnel (27) séparé du dihydrogène est en tout ou partie introduit dans l'enceinte réactionnelle (12) pour former le pyrocarbone dans cette enceinte.

8. Procédé selon l'une quelconque des revendications 1 à 7, dans lequel l'enceinte réactionnelle (12) comprend une préforme d'une pièce de friction à obtenir, et dans lequel on densifie cette préforme par le pyrocarbone formé par infiltration chimique en phase vapeur à partir de l'hydrocarbure introduit.

## Patentansprüche

1. Verfahren zur Wiederverwertung (10) eines kohlenstoffhaltigen Nebenprodukts (101, 102, 103), das bei der Herstellung eines Materialstücks aus Kohlenstoff/Kohlenstoff-Verbundmaterial erhalten wird, umfassend:
- Pyrolysieren (13) des kohlenstoffhaltigen Nebenprodukts, um einen festen kohlenstoffhaltigen Rückstand (22) zu erhalten,
- Bilden einer Gasphase, die einen Kohlenwasserstoff (24) umfasst, aus dem kohlenstoffhaltigen Rückstand,
- Abtrennen des Kohlenwasserstoffs von dem Rest der Gasphase,
- Einbringen des so abgetrennten Kohlenwasserstoffs (24) in eine Reaktionskammer (12), und
- Bilden von Pyrokohlenstoff in der Reaktionskammer aus dem durch Infiltration oder chemische Gasphasenabscheidung eingebrachten Kohlenwasserstoff.

2. Verfahren zur Wiederverwertung nach Anspruch 1, wobei das kohlenstoffhaltige Nebenprodukt umfasst: einen polyzyklischen aromatischen Kohlenwasserstoff (102), ein Nebenprodukt, das bei einem Textilvorgang zur Herstellung einer faserigen Verstärkung des Materialstücks aus Verbundmaterial (101) entsteht, ein Nebenprodukt, das bei der Bearbeitung eines Rohlings des Stücks aus Verbundmaterial (103) entsteht, oder mehrere dieser Nebenprodukte.

3. Verfahren zur Wiederverwertung nach Anspruch 1 oder 2, wobei die Bildung der Gasphase umfasst:
- eine Oxidation (14) des kohlenstoffhaltigen Rückstands (22), um ein gasförmiges Kohlenstoffoxid (23) zu erhalten, und
- eine Hydrierung (15) des erhaltenen Kohlenstoffoxids, um die Gasphase zu bilden, die den Kohlenwasserstoff (24) umfasst.

4. Verfahren zur Wiederverwertung nach Anspruch 3, wobei Wasser (28) bei der Hydrierung (15) gebildet wird, wobei das gebildete Wasser anschließend von dem Kohlenwasserstoff abgetrennt und dann zum Oxidieren des kohlenstoffhaltigen Rückstands (22) verwendet wird.

5. Verfahren zur Wiederverwertung nach einem der Ansprüche 1 bis 4, wobei ein Gasstrom (29) bei der Pyrolyse des Nebenprodukts gebildet wird, wobei dieser Gasstrom einen zusätzlichen Kohlenwasserstoff (27) und Diwasserstoff (26) umfasst, und wobei der Diwasserstoff von dem Rest des Gasstroms abgetrennt ist.

6. Verfahren zur Wiederverwertung nach Anspruch 5, wobei der so abgetrennte Diwasserstoff (26) verwendet wird, um die Gasphase zu bilden.

7. Verfahren nach Anspruch 5 oder 6, wobei der von dem Diwasserstoff abgetrennte zusätzliche Kohlenwasserstoff (27) ganz oder teilweise in die Reaktionskammer (12) eingeleitet wird, um den Pyrokohlenstoff in dieser Kammer zu bilden.

8. Verfahren nach einem der Ansprüche 1 bis 7, wobei die Reaktionskammer (12) eine Vorform eines zu erhaltenden Reibungsstücks umfasst und wobei diese Vorform durch den Pyrokohlenstoff verdichtet wird, der durch chemische Infiltration in der Dampfphase aus dem eingeleiteten Kohlenwasserstoff gebildet wird.

## Claims

1. A method for recycling (10) a carbonaceous by-product (101, 102, 103) obtained during the manufacture of a part made of carbon/carbon composite material comprising:
- pyrolysis (13) of the carbonaceous by-product so as to obtain a solid carbonaceous residue (22);
- forming a gas phase comprising a hydrocarbon (24) from the carbonaceous residue;
- separating the hydrocarbon from the remainder of the gas phase;
- introducing the hydrocarbon (24) separated in this way into a reaction chamber (12); and
- forming pyrolytic carbon in the reaction chamber from the hydrocarbon introduced by infiltration or chemical vapor deposition.

2. The recycling method according to claim 1, wherein the carbonaceous by-product comprises: a polycyclic aromatic hydrocarbon (102), a by-product from a textile operation for manufacturing a fibrous reinforcement of the composite material part (101), a by-product from the machining of a blank of the composite material part (103), or several of these by-products.

3. The recycling method according to claim 1 or 2, wherein the formation of the gas phase comprises:
- an oxidation (14) of the carbonaceous residue (22) so as to obtain a gas carbon oxide (23); and
- a hydrogenation (15) of the carbon oxide obtained so as to form the gas phase comprising the hydrocarbon (24).

4. The recycling method according to claim 3, wherein water (28) is formed during hydrogenation (15), the water formed being then separated from the hydrocarbon then used to oxidize the carbonaceous residue (22).

5. The recycling method according to any one of claims 1 to 4, wherein a gas stream (29) is formed during the pyrolysis of the by-product, this gas stream comprising an additional hydrocarbon (27) and dihydrogen (26), and wherein the dihydrogen is separated from the remainder of the gas stream.

6. The recycling method according to claim 5, wherein the dihydrogen (26) separated in this way is used in order to form the gas phase.

7. The method according to claim 5 or 6, wherein the additional hydrocarbon (27) separated from the dihydrogen is wholly or partly introduced into the reaction chamber (12) to form the pyrolytic carbon in this chamber.

8. The method according to any one of claims 1 to 7, wherein the reaction chamber (12) comprises a preform of a friction part to be obtained, and wherein this preform is densified by the pyrolytic carbon formed by chemical vapor infiltration from the hydrocarbon introduced.
